# FASCICULE DE BREVET EUROPEEN

(11) **EP 3 864 273 B1**
(45) Date de publication et mention de la délivrance du brevet: **09.08.2023**
(21) Numéro de dépôt: 19842784.1
(22) Date de dépôt: 21.11.2019
(51) Int. Cl.: F02C 7/06, F02C 7/36, F02K 3/06

(54) **AGENCEMENT DE TURBORÉACTEUR DOUBLE FLUX À RÉDUCTEUR ÉPICYCLOÏDAL OU PLANÉTAIRE**
ZWEIFLUTIGE TURBOSTRAHLTRIEBWERKSANORDNUNG MIT EPIZYKLOID- ODER PLANETENUNTERSETZUNGSGETRIEBE
DOUBLE-FLOW TURBOJET ENGINE ASSEMBLY WITH EPICYCLOIDAL OR PLANETARY REDUCTION GEAR

(30) Priorité: 27.11.2018 FR 1871929
(43) Date de publication de la demande: 18.08.2021
(73) Titulaire: SAFRAN AIRCRAFT ENGINES, 75015 Paris (FR)
(72) Inventeur: TAN-KIM, Alexandre, Jean-Marie, 77550 MOISSY-CRAMAYEL (FR); BENSLAMA, Yanis, 77550 MOISSY-CRAMAYEL (FR); DIEVART, Jérémy, 77550 MOISSY-CRAMAYEL (FR); BECOULET, Julien, Fabien, Patrick, 77550 MOISSY-CRAMAYEL (FR)
(74) Mandataire: Brevalex
(86) Numéro de dépôt international: PCT/FR2019/052778
(87) Numéro de publication internationale: WO 2020/109706

(56) Documents cités:
- EP-A1- 3 447 243
- GB-A- 1 251 955
- US-A1- 2014 119 885
- US-A1- 2015 176 497

## Description

### DOMAINE TECHNIQUE

L'invention concerne un agencement de turboréacteur double corps intégrant un réducteur épicycloidal ou planétaire.

### ÉTAT DE LA TECHNIQUE ANTÉRIEURE

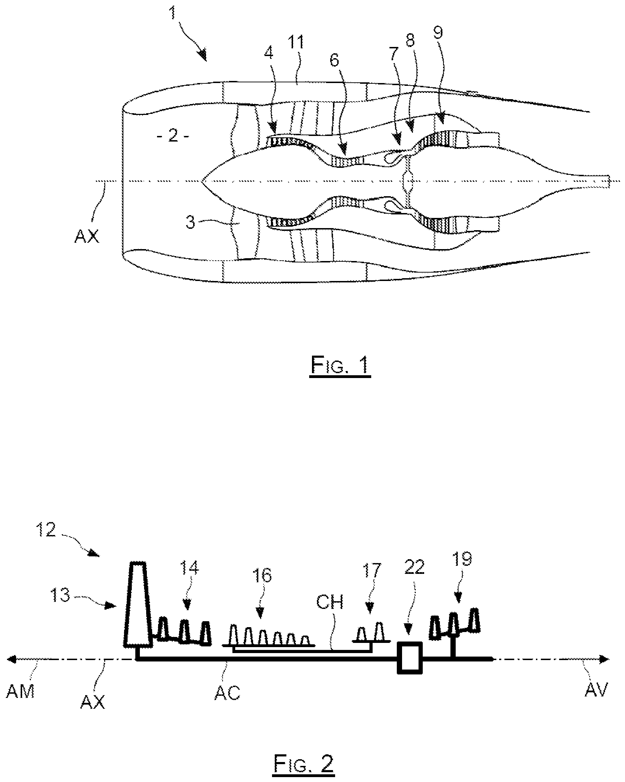

Dans un tel moteur 1 représenté sur la figure 1, l'air est admis dans une manche d'entrée 2 pour traverser une soufflante 3 comportant une série de pales rotatives avant de se scinder en un flux primaire central et un flux secondaire entourant le flux primaire.

Le flux primaire est ensuite compressé dans des étages de compression 4 et 6 avant d'arriver dans une chambre de combustion 7, après quoi il est détendu à travers une turbine haute pression 8 et une turbine basse pression 9 avant d'être évacué vers l'arrière. Le flux secondaire est quant à lui propulsé directement vers l'arrière par la soufflante dans une veine délimitée par le carter 11.

Un tel moteur de type double-corps comporte un corps dit basse pression par lequel la soufflante 3 est couplée à la turbine basse pression, et un corps dit haute pression par lequel le compresseur est couplé à la turbine haute pression, ces deux corps étant coaxiaux et indépendants l'un de l'autre en rotation.

Grâce à un réducteur interposé entre la turbine basse pression et la soufflante, la turbine basse pression tourne plus vite que la soufflante qu'elle entraîne, afin d'accroitre le rendement. Dans cette configuration, le corps basse pression comporte un arbre central d'entrainement de la soufflante et un rotor portant la turbine basse pression en étant lié à l'arbre central par le réducteur.

Les corps haute pression et basse pression sont maintenus par des paliers portés par des éléments structuraux du moteur. En pratique, le corps basse pression est un élément critique de l'agencement, car son arbre central s'étend sensiblement sur toute la longueur du moteur, de sorte qu'en service, c'est-à-dire lorsqu'il tourne, il peut être sujet à des modes vibratoires susceptibles de conduire à la ruine du moteur. En particulier, du fait de sa longueur importante, le premier mode de vibration en flexion de l'arbre central se trouve être dans sa plage de fonctionnement, c'est-à-dire dans la plage de fréquences correspondant à ses fréquences de rotation.

Cette situation nécessite de réaliser un équilibrage à grande vitesse de l'arbre central, mais également de prévoir des paliers capables d'amortir ses modes vibratoires pour limiter les éventuelles instabilités. De tels paliers, généralement désignés par l'acronyme SFD signifiant « *squeeze film dampers* » comportent une cage souple fixe portant un roulement recevant le corps basse pression, et autour de laquelle est maintenue une pression hydraulique, ce type de palier étant coûteux à mettre en oeuvre.

Le but de l'invention est d'apporter des solutions d'agencement permettant d'améliorer le maintien des éléments rotatifs basse pression pour limiter le recours à des paliers complexes d'amortissement de modes vibratoires.

Un turboréacteur selon l'art antérieur est divulgué dans le document US2015176497.

### EXPOSÉ DE L'INVENTION

A cet effet, l'invention a pour objet un turboréacteur à double flux comportant un arbre central entouré par un corps haute pression coaxiaux et indépendants en rotation, ce turboréacteur comportant depuis l'amont vers l'aval considérés selon le sens de circulation du flux qui le traverse lorsqu'il est en service :
- une soufflante entraînée par l'arbre central ;
- un compresseur haute pression et une turbine haute pression faisant partie du corps haute pression ;
- un carter inter-turbines ;
- une turbine basse pression ;
- un carter d'échappement ;
ce turboréacteur comportant en outre :
- un rotor basse pression s'étendant en aval de l'arbre central et qui comprend la turbine basse pression ;
- un palier de rotor porté par le carter d'échappement, et qui guide en rotation le rotor basse pression ;
- un réducteur par l'intermédiaire duquel le rotor basse pression entraine l'arbre central, ce réducteur étant situé en amont du palier de rotor ;
- un palier aval d'arbre qui guide en rotation l'arbre central en étant situé en amont du réducteur.

Avec cet agencement, la vitesse de l'arbre central est abaissée, ce qui contribue à diminuer les fréquences de ses modes propres pour les éloigner des fréquences de rotation. L'abaissement de cette vitesse de l'arbre central permet également d'augmenter le diamètre de soufflante sans que la vitesse en extrémité des pales de cette soufflante ne soit excessive.

L'invention a également pour objet un turboréacteur ainsi défini, dans lequel le palier aval d'arbre est porté par le carter inter-turbines.

L'invention a également pour objet un turboréacteur ainsi défini, dans lequel le réducteur est un réducteur épicycloïdal comprenant :
- des satellites portés par un porte satellites qui est porté par l'arbre central ;
- une couronne interne qui est portée par le rotor basse pression ;
- une couronne externe qui est portée par le carter inter-turbines ;
- chaque satellite étant engrené avec la couronne interne et avec la couronne externe.

L'invention a également pour objet un turboréacteur ainsi défini, dans lequel le réducteur est un réducteur planétaire comprenant :
- des satellites portés par un porte satellites qui est porté par le carter inter-turbines ;
- une couronne interne qui est portée par le rotor basse pression ;
- une couronne externe qui est portée par l'arbre central ;
- chaque satellite étant engrené avec la couronne interne et avec la couronne externe.

L'invention a également pour objet un turboréacteur ainsi défini, comportant un compresseur basse pression entraîné par l'arbre central en étant situé entre la soufflante et le compresseur haute pression.

### BRÈVE DESCRIPTION DES DESSINS

La figure 1 est une vue en coupe longitudinale d'un turboréacteur double flux et double corps connu ;
La figure 2 est une vue schématique en coupe longitudinale d'une architecture de turboréacteur selon l'invention ;
La figure 3 est une vue schématique en coupe longitudinale d'une portion aval d'architecture de turboréacteur selon un premier mode de réalisation de l'invention ;
La figure 4 est une vue schématique en coupe longitudinale d'une portion aval d'architecture de turboréacteur selon un deuxième mode de réalisation de l'invention.

### EXPOSÉ DÉTAILLÉ DE MODES DE RÉALISATION PARTICULIERS

Comme représenté schématiquement sur la figure 2, le moteur selon l'invention présente une architecture comprenant une soufflante 13 à sa partie amont AM suivie d'un compresseur basse pression 14. Cette soufflante 13 et ce compresseur basse pression 14 sont entraînés en rotation par un arbre central AC s'étendant sur l'essentiel de la longueur du moteur, la soufflante 13 étant traversée par l'ensemble du flux qui entre dans ce moteur en circulant depuis l'amont AM vers l'aval AV.

Un compresseur haute pression 16 situé immédiatement en aval AV du compresseur 14 comprime le fluide du flux primaire ayant traversé le compresseur basse pression, avant son admission dans une chambre de combustion non représentée située immédiatement en aval de ce compresseur haute pression 16.

Après passage dans la chambre de combustion, le fluide est détendu à travers une turbine haute pression 17 qui entraine le compresseur 16. Les aubages du compresseur haute pression 16 et de la turbine haute pression 17 sont portés par un même corps haute pression CH. Ce corps haute pression CH s'étend dans la région centrale du moteur le long de l'axe AX, il entoure l'arbre central AC en étant complètement indépendant en rotation de celui-ci.

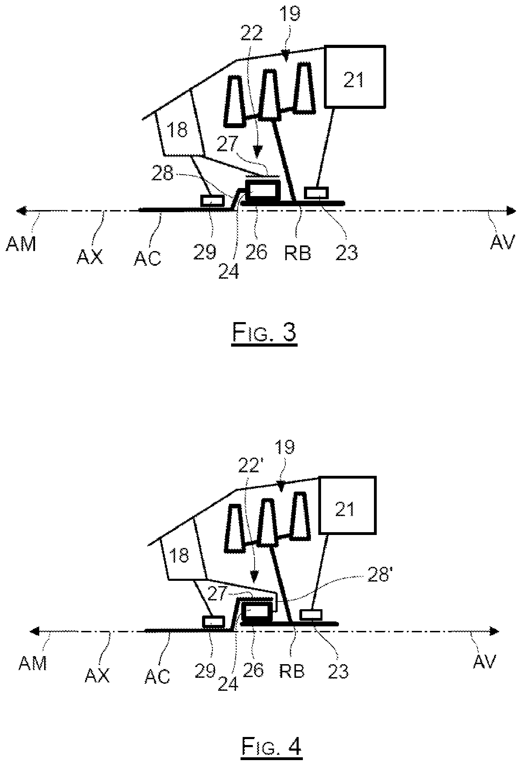

Après avoir traversé la turbine haute pression 17, le fluide transite dans un carter inter-turbines repéré par 18 sur la figure 3, avant de traverser une turbine basse pression 19, pour être ensuite évacué à travers un carter d'échappement 21.

Le carter inter-turbines 18 comporte une virole externe et une virole interne concentriques délimitant entre elles un espace annulaire de passage du flux primaire, ainsi qu'un ensemble de pales radiales fixes reliant chacune la virole externe à la virole interne et permettant de dévriller le flux primaire. De manière analogue, le carter d'échappement 21 comporte une virole externe et une virole interne concentriques délimitant un espace annulaire de passage du flux primaire détendu, ainsi qu'un ensemble de bras radiaux fixes reliant chacun ces deux viroles l'une à l'autre.

La turbine basse pression 19 est portée par un rotor RB s'étendant dans le prolongement aval de l'arbre central AC, et ce rotor RB est lié en rotation à cet arbre central AC par un réducteur 22. Ce réducteur 22 qui est situé longitudinalement entre l'arbre central AC et le rotor RB, assure que la turbine 19 tourne plus vite que la soufflante 13, afin d'améliorer le rendement du moteur.

Ce rotor RB portant la turbine 19 s'étend depuis une partie médiane par laquelle il porte les disques ou aubages de la turbine basse pression, jusqu'à une partie amont par laquelle il est accouplé au réducteur 22.

Comme visible sur la figure 3, le rotor basse pression RB est maintenu et guidé en rotation par un palier aval 23, qui est porté par le carter d'échappement 21 et qui récupère l'effort axial de poussée généré par la turbine basse pression pour le transférer à la structure porteuse du moteur par l'intermédiaire du carter d'échappement.

Ce réducteur 22 comporte des pignons satellites 24 entourant une couronne interne 26, encore appelée couronne solaire, et entourés par une couronne externe 27 en étant chacun engrené avec ces deux couronnes, ces pignons 24 étant portés par un porte satellite 28. La couronne interne 26 est rigidement solidaire du rotor basse pression RB alors que la couronne externe 27 est rigidement solidaire du carter inter-turbines 18 en étant portée par celui-ci. Le réducteur 22 est épicycloïdal, c'est-à-dire que le porte satellites 28 est mobile en rotation en étant rigidement solidaire de l'arbre central AC.

L'arbre central AC est porté et guidé en rotation d'une part par un palier amont non visible sur la figure 3 et situé en partie amont du moteur, et par un palier aval d'arbre central 29 qui est situé en amont du réducteur 22, en étant porté par le carter inter-turbines 18.

L'exemple de la figure 4 montre un mode de réalisation ayant la même architecture que la figure 3, mais dans lequel le réducteur, repéré par 22', est un réducteur planétaire et non pas épicycloïdal.

Ce réducteur planétaire 22' comporte aussi des pignons satellites 24 entourant une couronne interne 26 solaire, et entourés par une couronne externe 27 en étant chacun engrené avec ces deux couronnes, ces pignons 24 étant portés par un porte satellite 28'. La couronne externe 27 est mobile en étant rigidement solidaire de l'arbre central AC, et la couronne interne 26 est portée par le rotor basse pression RB. Le porte satellites, repéré par 28', est ici fixe en étant porté par le carter inter-turbines 18.

L'arbre central AC est là aussi maintenu d'une part par un palier amont non visible et par le palier aval 29 porté par le carter inter-turbines 18 en étant situé en amont du réducteur 22', ces deux paliers ayant le même agencement que dans l'exemple de la figure 3 déjà décrite.

L'invention permet de supprimer des paliers additionnels usuellement prévus pour supporter l'arbre central dans le but de déplacer les fréquences propres de cet arbre hors de ses fréquences de rotation. Elle permet ainsi de limiter la mise en oeuvre de paliers complexes tels que les paliers SFD, et de réduire la précision d'équilibrage requise pour l'arbre central.

## Revendications

1. Turboréacteur à double flux comportant un arbre central (AC) entouré par un corps haute pression (CH) coaxiaux et indépendants en rotation, ce turboréacteur comportant depuis l'amont (AM) vers l'aval (AV) considérés selon le sens de circulation du flux qui le traverse lorsqu'il est en service :
- une soufflante (13) entraînée par l'arbre central (AC) ;
- un compresseur haute pression (16) et une turbine haute pression (17) faisant partie du corps haute pression (CH) ;
- un carter inter-turbines (18) ;
- une turbine basse pression (19) ;
- un carter d'échappement (21) ;
ce turboréacteur comportant en outre :
- un rotor basse pression (RB) s'étendant en aval de l'arbre central (AC) et qui comprend la turbine basse pression (19) ;
- un palier de rotor (23) porté par le carter d'échappement (21), et qui guide en rotation le rotor basse pression (RB) ;
- un réducteur (22, 22') par l'intermédiaire duquel le rotor basse pression (RB) entraine l'arbre central (AC), ce réducteur étant situé en amont du palier de rotor(23) ;
- un palier aval d'arbre (29) qui guide en rotation l'arbre central (AC) en étant situé en amont du réducteur (22, 22').

2. Turboréacteur selon la revendication 1, dans lequel le palier aval d'arbre (29) est porté par le carter inter-turbines (18).

3. Turboréacteur selon l'une des revendications précédentes, dans lequel le réducteur (22) est un réducteur épicycloïdal comprenant :
- des satellites (24) portés par un porte satellites (28) qui est porté par l'arbre central (AC) ;
- une couronne interne (26) qui est portée par le rotor basse pression (RB) ;
- une couronne externe (27) qui est portée par le carter inter-turbines (18) ;
- chaque satellite (28) étant engrené avec la couronne interne (26) et avec la couronne externe (27).

4. Turboréacteur selon la revendication 1 ou 2, dans lequel le réducteur (22') est un réducteur planétaire comprenant :
- des satellites (24) portés par un porte satellites (28') qui est porté par le carter inter-turbines (18) ;
- une couronne interne (26) qui est portée par le rotor basse pression (RB) ;
- une couronne externe (27) qui est portée par l'arbre central (AC) ;
- chaque satellite (24) étant engrené avec la couronne interne (26) et avec la couronne externe (27).

5. Turboréacteur selon l'une des revendications précédentes, comportant un compresseur basse pression (14) entraîné par l'arbre central (AC) en étant situé entre la soufflante (13) et le compresseur haute pression (16).

## Patentansprüche

1. Zweiflutiges Turbostrahltriebwerk, umfassend eine von einem Hochdruckkörper (CH) umgebene zentrale Welle (AC), die koaxial und rotatorisch unabhängig sind, wobei dieses Turbostrahltriebwerk von stromaufwärts (AM) nach stromabwärts (AV), betrachtet in Zirkulationsrichtung des Stroms, der es durchquert, wenn es im Betrieb ist, aufweist:
- ein Gebläse (13), das von der zentralen Welle (AC) angetrieben wird;
- einen Hochdruckkompressor (16) und eine Hochdruckturbine (17) als Teil des Hochdruckkörpers (CH);
- ein Turbinenzwischengehäuse (18);
- eine Niederdruckturbine (19);
- ein Auslassgehäuse (21);
wobei dieses Turbostrahltriebwerk ferner aufweist:
- einen Niederdruckrotor (RB), der sich stromabwärts von der zentralen Welle (AC) erstreckt und der die Niederdruckturbine (19) umfasst;
- ein Rotorlager (23), das vom Auslassgehäuse (21) getragen wird und das den Niederdruckrotor (RB) rotatorisch führt;
- ein Untersetzungsgetriebe (22, 22'), über das der Niederdruckrotor (RB) die zentrale Welle (AC) antreibt, wobei sich dieses Untersetzungsgetriebe stromaufwärts vom Rotorlager (23) befindet;
- ein stromabwärtiges Wellenlager (29), das die zentrale Welle (AC) rotatorisch führt, indem es sich stromaufwärts vom Untersetzungsgetriebe (22, 22') befindet.

2. Turbostrahltriebwerk nach Anspruch 1, wobei das stromabwärtige Wellenlager (29) von dem Turbinenzwischengehäuse (18) getragen wird.

3. Turbostrahltriebwerk nach einem der vorangehenden Ansprüche, wobei das Untersetzungsgetriebe (22) ein epizyklisches Untersetzungsgetriebe ist, das umfasst:
- Satelliten (24), die von einem Satellitenträger (28) getragen werden, der von der zentralen Welle (AC) getragen wird;
- einen inneren Kranz (26), der vom Niederdruckrotor (RB) getragen wird;
- einen äußeren Kranz (27), der von dem Turbinenzwischengehäuse (18) getragen wird;
wobei jeder Satellit (28) mit dem inneren Kranz (26) und mit dem äußeren Kranz (27) im Eingriff ist.

4. Turbostrahltriebwerk nach Anspruch 1 oder 2, wobei das Untersetzungsgetriebe (22') ein Planeten-Untersetzungsgetriebe ist, das umfasst:
- Satelliten (24), die von einem Satellitenträger (28') getragen werden, der von dem Turbinenzwischengehäuse (18) getragen wird;
- einen inneren Kranz (26), der vom Niederdruckrotor (RB) getragen wird;
- einen äußeren Kranz (27), der von der zentralen Welle (AC) getragen wird;
- wobei jeder Satellit (24) mit dem inneren Kranz (26) und mit dem äußeren Kranz (27) im Eingriff ist.

5. Turbostrahltriebwerk nach einem der vorangehenden Ansprüche, aufweisend einen von der zentralen Welle (AC) angetriebenen Niederdruckkompressor (14), indem er sich zwischen dem Gebläse (13) und dem Hochdruckkompressor (16) befindet.

## Claims

1. Twin-spool turbojet engine including a central shaft (AC) surrounded by a high-pressure spool (CH) that are coaxial and independent with respect to rotation, this turbojet engine including, from upstream (AM) to downstream (AV) considered in the direction of travel of the flow that passes through it when it is in service:
- a fan (13) driven by the central shaft (AC);
- a high-pressure compressor (16) and a high-pressure turbine (17) forming part of the high-pressure spool (CH);
- an interturbine casing (18);
- a low-pressure turbine (19);
- an exhaust casing (21);
this turbojet engine further including:
- a low-pressure rotor (RB) extending downstream of the central shaft (AC) and which comprises the low-pressure turbine (19);
- a rotor bearing (23) carried by the exhaust casing (21), and which rotationally guides the low-pressure rotor (RB);
- a reduction gear (22, 22') by means of which the low-pressure rotor (RB) drives the central shaft (AC), this reduction gear being located upstream of the rotor bearing (23);
- a downstream shaft bearing (29) that rotationally guides the central shaft (AC) while being located upstream of the reduction gear (22, 22').

2. Turbojet engine according to claim 1, wherein the downstream shaft bearing (29) is carried by the interturbine casing (18).

3. Turbojet engine according to one of the preceding claims, wherein the reduction gear (22) is an epicycloidal reduction gear comprising:
- planet gears (24) carried by a planet holder (28) that is carried by the central shaft (AC);
- an inner ring (26) that is carried by the low-pressure rotor (RB);
- an outer ring (27) that is carried by the interturbine casing (18);
- each planet gear (28) being meshed with the inner ring (26) and with the outer ring (27).

4. Turbojet engine according to claim 1 or 2, wherein the reduction gear (22') is a planetary reduction gear comprising:
- planet gears (24) carried by a planet carrier (28') that is carried by the interturbine casing (18);
- an inner ring (26) that is carried by the low-pressure rotor (RB);
- an outer ring (27) that is carried by the central shaft (AC)t;
- each planet gear (24) being meshed with the inner ring (26) and with the outer ring (27).

5. Turbojet engine according to one of the preceding claims, including a low-pressure compressor (14) driven by the central shaft (AC) while being located between the fan (13) and the high-pressure compressor (16).
